# EUROPÄISCHE PATENTSCHRIFT

(11) **EP 2 759 575 B1**
(45) Veröffentlichungstag und Bekanntmachung des Hinweises auf die Patenterteilung: **12.10.2016**
(21) Anmeldenummer: 13005470.3
(22) Anmeldetag: 22.11.2013
(51) Int. Cl.: C09D 5/34

(54) **Gebinde enthaltend eine Fugenmasse**
Container containing a joint sealant
Gerbe contenant une masse d'assemblage

(30) Priorität: 23.01.2013 DE 102013001101; 14.03.2013 DE 102013004358
(43) Veröffentlichungstag der Anmeldung: 30.07.2014
(73) Patentinhaber: Hinkelmann, Jörg, 37574 Einbeck (DE)
(72) Erfinder: Hinkelmann, Jörg, 37574 Einbeck (DE)
(74) Vertreter: Sobisch, Peter

(56) Entgegenhaltungen:
- DE-A1-102010 010 523
- GB-A- 2 465 409
- US-A1- 2004 109 853
- US-A1- 2011 236 587
- US-A1- 2011 280 961

## Beschreibung

Die Erfindung bezieht sich auf ein Gebinde entsprechend dem Oberbegriff des Anspruchs 1.

Schäden an aus Holz bestehenden Bauwerken, z. B. den Balken des Fachwerks historischer Bauten machen sich häufig in der Form von mehr oder weniger großen Rissen unterschiedlicher Form und Ausdehnung bemerkbar. Sie sind auf vielfältige Ursachen wie Witterungs- und Umwelteinflüsse, Trocknungsvorgänge infolge wechselnden Raumklimas, Schädlingsbefall, Fäulnis usw. zurückführbar und können für den Fall einer unkontrollierten Ausbreitung beträchtliche Folgeschäden auslösen.

Eine zum Schließen dieser Risse bestimmte Fugenmasse muss zwangsläufig vielfältige, durch die Gesamtheit der Einsatzbedingungen des jeweiligen Holzwerkstoffs vorgegebene Einsatzbedingungen definierbare Anforderungen erfüllen. Diese betreffen Eigenschaften wie z. B. die Festigkeit, die Gasdurchlässigkeit, das thermische und das Diffusionsverhalten, die Widerstandsfähigkeit gegenüber Umwelteinflüssen und solchen Einflüssen, die sich aus einem jeweiligen ebenfalls wechselnden Innenraumklima ergeben wie wechselnde Temperaturen, Luftfeuchtigkeit, UV-Strahlung, Schädlingsbefall usw.. Hinzu treten Eigenschaften betreffend die Verarbeitbarkeit im Bereitstellungszustand sowie das erzielbare äußere Erscheinungsbild im Bereich der verfüllten Risse, welches auch aus ästhetischen Gründen einschließlich der sich einstellenden Oberflächenstruktur demjenigen der übrigen Bereiche des Holzwerkstoffs möglichst entsprechen sollte.

Es ist bekannt, zur Verfüllung derartiger Risse Werkstoffe auf der Basis von Lehm zu benutzen. Lehm wird aus unterschiedlichen bauphysikalischen Gründen bevorzugt und besteht aus einem natürlichen, wasserhaltigen Gemenge aus Ton sowie feinsandigen bis grobkörnigen Bestandteilen, wobei seine Bindekraft auf den Tonanteilen beru ht. Wasseranteile im Lehm sind im Ausgangszustand im wesentlichen kapillar gebunden und begründen dessen einfache plastische Verarbeitbarkeit. Sie bilden somit zwar einen notwendigen Bestandteil für die Verarbeitung, stellen jedoch gleichzeitig insoweit ein Risiko dar, als es nach Maßgabe der thermischen Bedingungen der Umgebungsatmosphäre zu unvermeidbaren Verdampfungsvorgängen und mit diesen einhergehenden Schwundrissen kommen kann. Bei der Verwendung von Werkstoffen auf Lehmbasis muss dieser Umstand beachtet werden.

Aus der US 2011/0280961 A1 ist eine fungizid wirksame stoffliche Zusammensetzung zur Verwendung als Mittel zur Oberflächenbeschichtung auch auf Holz bekannt. Diese Zusammensetzung enthält keine Lehmkomponente und ist nicht zum Füllen von Rissen bestimmt.

Aus der US 2011/0236587 A1 ist ein Oberflächenbeschichtungsmittel für Dekorzwecke bekannt, welches aus einem Lösungsmittel für ein Polymer, einem Puffer, einem oberflächenaktiven Mittel, einem antimikrobiell wirksamen Mittel, einem Weichmacher, einem wasserlöslichen, zur Bildung eines Films geeigneten Polymer und einem flüssigen Träger besteht. Das Mittel kann in einem Gebinde zur Verfügung gestellt werden, in welchem einige Komponenten in Teilgebinden untergebracht sind, die erst unmittelbar vor ihrem Einsatz gemischt werden. Dieses Mittel ist nicht zum Verfüllen von Rissen in hfolzträgern bestimmt und enthält ebenfalls keine Lehmkomponente.

Aus der GB 2465409 A ist ein Dichtungsmittel auf der Basis eines monofunktionalen Monomers, z. B. einem Acrylat- oder einem Methacrylatmonomer, einem Vernetzungsmittel, einem Polymerisationskatalysator, einem Polymerisationsbeschleuniger und einem Lösungsmittel bekannt, welches zum Beschichten sowie zum Schließen von Öffnungen in diversen Werkstoffen, u, a. Holz mit einem trockenen Füllstoff gemischt wird. Als Füllstoffe kommen hierbei Sand, Sägemehl, Holzpartikel, mineralisch e Stoffe oder Baumwolle in Betracht. Die Komponenten können in der Form von zwei Gebinden bereitgestellt werden, welche erst unmittelbar vor ihrem Einsatz gemischt werden. Lehm ist kein Bestandteil dieses Mittels.

Das aus der US 2004/0109853 A1 bekannte Mittel ist zur Darstellung von Beschichtungen bestimmt und umfasst eine flüssige Komponente bestehend aus Wasser, Methanol, Ethanol, Isopropylalkohol oder einem sonstigen organischen Lösungsmittel. Das Mittel kann diverse Additive enthalten, deren Funktion in der Darstellung eines Korrosionsschutzes, eines Insektizides, eines Füllstoffs, eines Katalysators, eines Emulgiermittels usw. besteht. Dieses Mittel kann bei Holz in der Form einer Farbe auf Ölbasis, eines Lackes, einer hydrophoben Beschichtung, eines UV-Schutzes, einer Abdichtung oder auch zur Darstellung einer Dekoration eingesetzt werden. Dieses Mittel ist nicht zum Schließen von Rissen in Holz bestimmt und enthält keine Lehmkomponente.

Werkstoffe auf Lehmbasis, die für diesen Zweck konfektioniert sind, sind in vielfältiger Form bekannt.

So ist aus dem DE 20 2005 011 784 U1 eine zum Restaurieren von Holz bestimmte Fugenmasse bekannt, welche aus einem Gemenge aus Lehmpulver, Leinöl mit Trockenstoff sowie Füll- und Armierungsstoffen wie Sägemehl, Leinschäben, Feinstrohfasern, Tierhaaren oder auch sonstigen Naturfasern besteht. Diese Fugenmasse ist zur Durchführung von Restaurierungsmaßnahmen der Fachwerkssanierung, bei Verschalungen, Verschindelungen, zum Abdichten von Holzrissen, zum Schließen von unerwünschten Öffnungen beispielsweise im Bereich von Verzapfungen usw. bestimmt. Zu diesem Zweck werden die genannten Komponenten gemischt, und zwar mit der Maßgabe, dass gegebenenfalls unter Zugabe von Lehmpulver und Leinölfirnis schließlich eine pastöse, mittels einer Spachtel, einer Hand- oder Luftdruckkartusche unmittelbar verarbeitungsfähige Masse entsteht. Durch die Menge sowie die Beschaffenheit der Füll- und Armierungsstoffe sollen holzverwandte Eigenschaften hergestellt und ein Schwindungsverhalten infolge von Trocknungsvorgängen verhindert werden. Über die Wahl der Korngrößenverteilung soll die Fugenmasse hinsichtlich ihrer Konsistenz nach Maßgabe der Größe der zu füllenden unerwünschten Öffnungen eingestellt werden, wobei über das eingesetzte Leinöl ein wasserabweisender Schutz für den Holzwerkstoff dargestellt werden soll. Die Herstellung einer an den konkreten Einsatzfall optimal geeigneten Zusammensetzung dieser Fugenmasse setzt ein hohes Maß an praktischer Erfahrung voraus. Die Einstellung wasserabweisender absolut dichtender Eigenschaften ist nicht in allen Fällen erwünscht, da es zu Bauschäden infolge stauender Nässe führen kann. Bei der Verwendung von trocknenden Ölen wie insbesondere von Leinöl ist dessen Reaktion mit dem Sauerstoff der Umgebungsatmosphäre zu beachten.

Aus der DE 10 2006 049 222 B3 ist eine weitere zum Schließen von Rissen in den Balken von Fachwerkbauten bestimmte, lehmhaltige Fugenmasse bekannt, welche aus einem Gemenge aus Lehmanteilen, Holzpartikeln, trocknenden Ölen sowie rissüberbrückend wirksamen Füll- und Hilfsstoffen wie Textilfasern, Kunststofflasen, Tierhaaren, Strohhäcksel sowie Farbpigmenten besteht. Diese Fugenmasse liegt in einer für ein Einfüllen in Kartuschen, Schlauchbeutelverpackungen usw. geeigneten Konsistenz vor, in der sie somit in den Handel bringbar und bauseitig unmittelbar verarbeitungsfähig ist. Eine vergleichbare, unmittelbar gebrauchsfertig konfektionierte Fugenmasse aus der Basis ein Ton-Lehm-gemisches ist auch aus dem DE 20 2009 006 566 U1 bekannt und kann neben Naturfasern wie Stroh-, Hanf-, oder Flachsfasern zusätzlich Gesteinssande und -mehle enthalten. Als Schutz gegenüber Schädlingsbefall kann die Fugenmasse ferner Borax enthalten, wobei durch einen Zusatz von kalt gepresstem Leinöl ohne Trockenstoffe die Klebekraft der Fugenmasse und deren Gleitfähigkeit bei der Verarbeitung aus einer Kartusche heraus verbessert werden können.

Aus dem DE 201 11 132 U1 ist eine Trockenmischung für die Herstellung einer Leichtlehmwand bekannt, welche aus getrocknetem feinkörnigen Tonpulver, Sand oder Kies sowie Flachs- oder Hanfschäben besteht, die bauseitig zur Verarbeitung in einer Schalung mit Wasser zu einer verarbeitungsfähigen Masse gemischt werden. Der Mischvorgang kann in einem Betonmischer oder einem vergleichbaren Zwangsmischer durchgeführt werden. Alternativ kann auch eine mit Wasser bereits gemischte, analog zu einem Zementputz unmittelbar einsetzbare Masse bereitgestellt werden. Problematisch an der Verarbeitung ist, dass ein Mischen nur mit vergleichsweise wenig Wasser erfolgen muss, da die Masse nach erfolgter Verarbeitung austrocknen muss und es zu keiner chemischen Bindung von Wasseranteilen kommt. Dies setzt verarbeitungsseitig ein hohes Maß praktischer Erfahrung voraus.

Aus der DE 10 2010 010 523 B4 ist es bekannt, zum Schließen von Rissen im Holz von Holzbauteilen eine Fugenmasse zu verwenden, die aus einem Gemenge aus 75 Gew.-% bis 85 Ges.-% einer Lehmkomponente, 13 Ges.-% bis 20 Ges.-% eines Bindemittels und einem Lösungsmittel besteht. Als Bindemittel werden ein Harz wie z. B. ein Alkyd-, ein Amin- oder ein Phenolharz bzw. ersatzweise auch ein Alkyd-, ein Acryl-, ein Amin- oder ein Phenolharz, ein Öl sowie weitere Lösungsmittel vorgeschlagen.

Unmittelbar einsetzbare, alle Komponenten enthaltende Fugenmassen sind zwar insoweit von Vorteil, als bauseitig keinerlei Maßnahmen zur weiteren Konfektionierung der Masse erforderlich sind. Problematisch ist jedoch, dass in Abhängigkeit von der Gestalt der auszufüllenden Risse, insbesondere der Größe und Tiefe eine spezielle Konsistenz der Masse im Verarbeitungszustand erforderlich oder zumindest sinnvoll ist. Dies betrifft das Mengenverhältnis von festen und flüssigen Komponenten - dies betrifft gleichermaßen jedoch auch die eingesetzten Armierungs- und Füllstoffe, somit Parameter der eingesetzten Fugenmasse, die nach Maßgabe der örtlich vorgefundenen Verhältnisse einzustellen sind. Diesem Umstand wird durch fertige, in Kartuschen oder vergleichbaren Behältnissen bereitgestellte, unmittelbar einsetzbare Fugenmassen in vielen Fällen nicht hinreichend Rechnung getragen.

Die Anpassung dieser bekannten, zur Verwendung als Putz bzw. im Rahmen von Lehrnwänden bestimmten Massen auf Lehmbasis an die Anforderungen der Restaurierung von Holzwerkstoffen setzt verarbeitungsseitig ein hohes Maß praktischer Erfahrung voraus und betrifft insbesondere die Berücksichtigung der unterschiedlichen Rissformen sowie Rissgrößen welche unterschiedliche Konditionierungen der eingesetzten Fugenmasse erfordern. Bei der Füllung von Rissen sollte nämlich die eingesetzte Fugenmasse die werkstofflichen Eigenschaften des aus Holz bestehenden, zu restaurierenden Bauteils weitestgehend nachbilden.

Aus dem AT 11 689 U1 ist eine Masse bekannt, die aus einer Vormischung umfassend Anteile aus ungebranntem Lehm und / oder Ton, Fasern, Füllstoffen und einem Bindemittel besteht, dem zur Darstellung einer bauseitig einsetzbaren Fertigmischung Sand und Wasser beigegeben werden, wobei die so definierte Fertigmischung zur Verwendung im Rahmen von Baustoffen, Putzen und Anstreichmitteln auf der Basis von Zement, Kalk und Gips bestimmt ist. Die Zusammensetzung der an den konkreten Anwendungsfall angepassten Fertigmischung setzt wiederum ein hohes Maß an praktischer Erfahrung voraus.

Die Anpassung dieser bekannten, zur Verwendung als Putz bzw. im Rahmen von Lehmwänden bestimmten Massen auf Lehmbasis an die Anforderungen der Restaurierung von Holzwerkstoffen erfordert die Berücksichtigung der unterschiedlichen Rissformen sowie Rissgrößen, welche unterschiedliche Konditionierungen der eingesetzten Fugenmasse erfordern. Bei der Füllung von Rissen sollte nämlich die eingesetzte Fugenmasse die werkstofflichen Eigenschaften des aus Holz bestehenden, zu restaurierenden Bauteils weitestgehend nachbilden.

Ein bei der Restaurierung von Holzwerkstoffen bestehendes Risiko besteht in einem, insbesondere im Bereich der zu verfüllenden Risse bereits vorhandenen Schädlingsbefall in der Form von Mikroorganismen, Pilzen usw. Wird ein solcher Schädlingsbefall nicht erkannt bzw. nicht behandelt, kann es im Laufe der Zeit zu einer unkontrollierten Ausbreitung und schweren Bauschäden kommen.

Es ist vor diesem Hintergrund die Aufgabe der Erfindung, ein Gebinde für eine zur Füllung von Rissen in Holzwerkstoffen, z. B. den Balken eines Fachwerks bestimmte differenziert nach bauseitigen Anforderungen verarbeit- und einsetzbare Fugenmasse zu entwickeln. Es ist auch die Aufgabe der Erfindung, die zu verarbeitende Fugenmasse noch besser an Umgebungsbedingungen und die besonderen bauseitigen Anforderungen bei der Sanierung bzw. Restaurierung von Holzwerkstoffen, insbesondere bei Holzbauwerken, Fachwerkkonstruktionen, allgemeinen Balkenkonstruktionen usw. anzupassen. Gelöst ist diese Aufgabe bei einem solchen Gebinde durch die Merkmale des Kennzeichnungsteils des Anspruchs 1.

Erfindungswesentlich ist hiernach, dass das Gebinde eine Verpackungseinheit ist, die im Ausgangszustand im einfachsten Fall zumindest aus zwei Teilverpackungen besteht, die jeweils eine feste und eine flüssige Komponente der darzustellenden Fugenmasse enthalten, wobei die beiden Komponenten dazu bestimmt und geeignet sind, erst bauseitig durch Mischung zwecks Darstellung einer unmittelbar einsetzbaren Fugenmasse konfektioniert zu werden. Dieser Umstand eröffnet einfache Möglichkeiten die Konsistenz der Fugenmasse nach Maßgabe der örtlich vorgefundenen Gegebenheiten zu variieren. In Abhängigkeit von der Größe sowie der Gestalt der auszufüllenden Risse ist eine diesen angepasste Konsistenz erforderlich, nämlich mit Hinblick auf erzielbare Trocknungszeiten, mechanische Eigenschaften der getrockneten, den Riss füllenden Fugenmasse, die Erzielung einer zuverlässigen Füllung des Risses usw. Dieses Prinzip eines Mehrkomponenten-Gebindes kann - über eine Trennung fester und flüssiger Komponenten hinausgehend - im Sinne einer Unterteilung der Fugenmasse in weitere Teilverpackungen ausgedehnt werden, indem die Bestandteile der jeweiligen festen und / oder flüssigen Komponenten differenziert verpackt sind. In jedem Fall wird ein Gebinde angestrebt, welches bauseitig eine individuelle optimale Konfektionierung der einzusetzenden Fugenmasse ermöglicht. Das somit alle Komponenten in einer soweit erforderlich getrennten Form einbeziehende Gebinde kann als solches unmittelbar Gegenstand des Handelsverkehrs sein.

In wenigstens einer der Teilverpackungen des Gebindes ist ein zur Darstellung einer bioziden Atmosphäre innerhalb der Fugenmasse geeigneter Stoff beigemischt ist. Die bauseitig zu verarbeitende Fugenmasse liegt somit in der Form von wenigstens zwei vorkonfektionierten Komponenten vor, nämlich einer festen und einer flüssigen, so dass sich die Bereitstellung einer unmittelbar einzusetzenden Fugenmasse vereinfacht, da ihre Zusammensetzung in einem geringeren Maße von der individuellen Erfahrung des jeweiligen Verarbeiters abhängt. Diese Fugenmasse ist gegenüber einem Schädlingsbefall in der Form von Pilzen, Flechten und Mikroorganismen geschützt, wobei in diesem Rahmen grundsätzlich alle biozid wirksamen Stoffe eingesetzt werden können, die vorzugsweise langzeitstabile Eigenschaften aufweisen und eine dauerhafte Schutzwirkung entwickeln. Die so definierten Teilverpackungen sind vorzugsweise nach erstmaligem Gebrauch erneut verschließbar ausgebildet, so dass qualitätsverschlechternde Einflüsse der Umgebungsatmosphäre auf Restbestände der Komponenten vermieden werden. Als Zusatzstoff kann beispielsweise Holzmehl eingesetzt werden. Bei dem biozid wirksamen Stoff handelt es sich um einen solchen, der innerhalb der Fugenmasse eine alkalische Atmosphäre entwickelt. Eine solche Atmosphäre wirkt auf natürliche Weise desinfizierend. Stoffe, mit denen eine alkalische Atmosphäre bereit gestellt werden kann, sind beispielsweise wässrige Lösungen von Alkalimetallhydroxiden bzw. Lösungen von Basen. Der biozid wirksame Stoff ist in einer von den anderen Komponenten getrennten Teilverpackung innerhalb des Gebindes untergebracht. Diese Maßnahme verbessert die Flexibilität der bauseitigen Verwendung des Gebindes.

Die feste Komponente enthält neben einer Lehmkomponente zumindest noch Armierungsstoffe, nämlich in der Form von Fasern, vorzugsweise pflanzlichen bzw. organischen Ursprungs, wobei jedoch auch metallische Fasern sowie Kunststofffasern in Betracht kommen.

Als Lehmkomponente kommt hierbei vorzugsweise eine solche auf der Basis von Ton, Sand und Schluff in Betracht, wo-bei als Armierungsstoffe faserartige Stoffe unterschiedlicher Herkunft, insbesondere unterschiedlicher Faserdicke und Faserlänge einsetzbar sind. Vorzugsweise handelt es sich um organische Fasern pflanzlicher oder auch tierischer Herkunft, textile Fa-sem oder auch metallische Fasern, die sämtlich von ihrer Gestalt, ihrer Größe und ihrer stofflichen Beschaffenheit dazu geeignet sein müssen, im eingesetzten Zustand den mechanischen Zusammenhalt der getrockneten Fugenmasse und damit deren Festigkeit zu sichern. Als Zusatz- oder Füllstoffe kommen solche Stoffe in Betracht, die das äußere Erscheinungsbild der Fugenmasse beeinflussen, und zwar sowohl in struktureller als auch in farblicher Hinsicht. Weitere Zusatzstoffe können sein Kork, Styropor oder vergleichbare Schaumstoffe, jeweils in Partikel- bzw. Granulatform, m Steinmehl und Sand.

Die, die feste Komponente enthaltende Teilverpackung ist in wenigstens zwei Packungseinheiten unterteilt, die jeweils unterschiedliche Bestandteile der festen Komponente enthalten. Diese Packungseinheiten können jeweils auch wiederum nach erstmaligem Öffnen wiederverschließbar ausgebildet sein. So kann eine Packungseinheit für die Lehmkomponente und eine Packungseinheit für die Armierungsstoffe vorgesehen sein. Hinzutreten kann eine weitere Packungseinheit für Zusatz- und Füllstoffe, welche jedoch auch mit den Armierungsstoffen in einer Packungseinheit zu-sammengefasst sein können. Die, die Lehmkomponente enthaltende Packungseinheit kann im Bedarfsfall nach Maßgabe beliebiger stofflicher Parameter des Lehms weiter unterteilt sein.

Die Teilverpackungen des Gebindes können auch mit der Maßgabe eingerichtet sein, dass sich unter diesen zwei oder auch mehr Teilverpackungen befinden, die jeweils feste Komponenten in unterschiedlichen Korngrößen bzw. Feinheiten enthalten. Auf diese Weise ist die Möglichkeit gegeben, in Abhängigkeit von der Größe des mit einer Fugenmasse zu füllenden Risses durch Mischung von festen Komponenten unterschiedlicher Korngröße ein mehr oder weniger grobkörniges Gemenge herzustellen, welches nach erfolgter Mischung mit der flüssigen Komponente eine einsetzbare Fugenmasse bildet. Beispielsweise kann so zur Füllung größerer Risse ein eher grobkörnigeres Ge-menge eingesetzt werden.

Um unmittelbar bauseitig eine einsetzbare Fugenmasse bereit zu stellen, kann die wie vorstehend hergestellte, für einen Einsatz bei Rissen bestimmter Größe vorbereitete Fugenmasse in eine Kartusche oder ein vergleichbares, vorzugsweise verschließbares Behältnis eingefüllt werden, welches eine mengenmäßig einfach portionierbare Ausgabe der Masse ermöglicht, so dass zur unmittelbaren bauseitigen Verarbeitung eine bequeme Handhabbarkeit gegeben ist.

Das Gebinde enthält zusätzlich zu den Teilverpackungen eine Leerkartusche, einen Schlauchbeutel oder ein vergleichbares nutzerseitig mit einer einsetzbaren Fugenmasse zu befüllendes Behältnis umfassen. Die vorab durch Mischung der den Teilverpackungen entnehmbaren Komponenten abschließend konfektionierte Fugenmasse kann in dieses Behältnis eingefüllt werden, welches ebenfalls vorzugsweise erneut verschließbar ist. Aus diesem Behältnis wird die Fugenmasse bauseitig bzw. an ihrem unmittelbaren Einsatzort portioniert ausgetragen und zwecks Verfüllung von Rissen verarbeitet. Das so beschaffene Gebinde bildet somit ein nahezu vollständig ausgerüstetes, insbesondere für Transport- und Lagerzwecke geeignetes Arbeitsmittel.

Die, die Armierungsstoffe enthaltende Packungseinheit kann in wenigstens zwei Einheiten unterteilt sein, die entweder stofflich unterschiedliche Armierungsstoffe enthalten oder die Armierungsstoffe unterschiedlicher Größenparameter wie Faserlänge, Faserdicke, Korn-größe usw. enthalten können. Entsprechend der Geometrie der zu schließenden Risse kann der Einsatz dem angepasster Armierungsstoffe von Vorteil sein, insbe-sondere um auf werkstoffmechanischem Wege solche Festigkeitseigenschaften zu erzielen, die denjenigen des jeweiligen Holzwerkstoffs als Grundwerkstoff weitest-gehend angepasst sind.

Die Merkmale des Anspruchs 2 sind auf Eigenschaften der Teilverpackungen gerichtet. Diese sind luftdicht verschlossen und vorzugsweise nach einem erstmaligen Öffnen erneut entsprechend verschließbar. Wechselwirkungen zwischen den enthaltenen Komponenten der Fugenmasse und der Umgebungsatmosphäre, welche deren Verarbeitbarkeit beeinträchtigen könnten, werden somit weitestgehend ausgeschlossen. Die erneute Verschließbarkeit ermöglicht ein rationelles, auf eine vollständige stoffliche Ausnutzung gerichtetes Arbeiten. Soweit diese Anforderungen erfüllt sind, können die Teilverpackungen und gleichermaßen das Gebinde aus vielfältigen Materialien hergestellt werden. Vorzugsweise bestehen sie aus einem Kunststoff.

Die flüssige Komponente kann entsprechend den Merkmalen der Ansprüche 3 und 4 ein Bindemittel in der Form einer flüssigen Wasserglaslösung enthalten, und zwar in der Form einer Lösung von Kaliumsilikaten. Wasserglas bildet nach erfolgter Trocknung auf dem jeweiligen Substrat eine harte, wetterfeste jedoch wasserdampfdurchlässige Beschichtung. Innerhalb der Fugenmasse wirkt es in getrockneter Form als Bindemittel, verbessert deren Zusammenhalt und auf diese Weise deren Festigkeit. Es ergänzt somit die Wirkung der Armierungsmittel.

Die feste Komponente kann neben Füllstoffen ferner auch Pigmente enthalten, bei denen es sich bei einer Wasserglaslösung als Bindemittel jedoch um wasserglasechte Pigmente beispielsweise in der Form von Chromoxid, Eisenoxid, Titandioxid usw. handelt.

Pigmente können auch unmittelbar dem eingesetzten, in flüssiger Form vorliegenden Bindemittel beigemischt werden und einen Bestandteil der flüssigen Komponente bilden.

Die flüssige Komponente besteht entsprechend den Merkmalen der Ansprüche 5 und 6 aus einem Bindemittel, welches in der Form eines trocknenden Öles benutzt wird. Als trocknende Öle werden mit vielen Doppelbindungen, insbesondere durch eine Jodzahl von mehr als 170 gekennzeichnete Öle bezeichnet. Es sind dies Öle, die ungesättigte Fettsäuren wie z. B. Linol- und Linolensäure als Triglycerid enthalten und die unter dem Einfluss der Umgebungsatmosphäre durch Polymerisation einen festen elastischen Film bilden. Die Trocknungseigenschaft dieser Öle beruht somit auf einer Sauerstoffaufnahme und aufgrund dieses Umstands ist bei größeren auszufüllenden Rissen die Einstellung einer dem angepassten Konsistenz der Fugenmasse erforderlich, um sicherzustellen, dass innerhalb vertretbarer Zeiten eine möglichst homogene Durchdringung des Massekörpers der eingesetzten Fugenmasse mit Sauerstoff erreicht wird und insoweit die Darstellung der Funktion eines Bindemittels gegeben ist.

Der Einsatz trocknender Öle als Bindemittel zwischen den festen Partikeln der Fugenmasse im Übrigen verdeutlicht die Notwendigkeit einer luftdicht verschließbaren Teilverpackung für dieses Bindemittel, da es ansonsten durch Sauerstoffaufnahme zu unvermeidbaren Verharzungen kommt.

Die flüssige Komponente, das Bindemittel, kann vorzugsweise aus einem Leinöl oder einem Rapsöl bestehen, welche mit einem Trocknungshilfsmittel bzw. einem Sikkativ versetzt sind. Als trocknende Öle gelten neben Leinöl und Rapsöl beispielsweise Soja öl, Hanföl, Holzöl, Nussöl, Sonnenblumenöl, Ricinenöl usw. Durch Zusatz von Trocknungshilfsmitteln, bei denen es sich heute um Zirkonium-, Kobalt-, Calcium-, Mangan,- und Eisenverbindungen handelt, kann der Trocknungsprozess der Öle weiter beschleunigt werden. Insbesondere können auf diese Weise auch solche trocknenden Öle eingesetzt werden, deren Trocknungsvorgang auf natürlichem Wege ansonsten sehr langsam ablaufen würde.

Als Bindemittel können entsprechend den Merkmalen des Anspruchs 7 ferner Harze eingesetzt werden, insbesondere in Verbindung mit Ölen. Bei diesen Ölen handelt es sich wiederum um trocknende Öle, die im Bedarfsfall mit einem Trocknungshilfsmittel versetzt sein können.

In jedem Fall ergibt sich nach Mischung der beiden Komponenten des Gebindes eine unmittelbar verarbeitungsfähige, hinsichtlich ihrer Zusammensetzung in reproduzierbarer Weise konfektionierte, mit Pigmenten versehene, eine hohe Festigkeit aufweisende und gegenüber einen Schädlingsbefall geschützte Fugenmasse.

Die Lehmkomponente sowie die Armierungsstoffe können in einer Teilverpackung zusammengefasst sein, wohingegen für die genannten Zusatz- und Hilfsstoffe eine weitere Teilverpackung innerhalb des Gebindes bereitgestellt wird. Es können jedoch auch sämtliche festen Komponenten in einer Teilverpackung zusammengefasst werden.

Man erkennt anhand der vorstehenden Ausführungen, dass mit dem erfindungsgemäßen Gebinde ein rationell nutzbares Arbeitsmittel zur Verfügung gestellt wird, welches in einfacher Weise bauseitig ein flexibles, den jeweiligen speziellen Randbedingungen optimal angepasstes Arbeiten ermöglicht, indem die Eigenschaften der in den zu füllenden Riss des Holzwerkstoffs einzubringenden Fugenmasse durch Wahl und Mengenbemessung standardisiert bereitgestellter Bestandteile entsprechend eingestellt werden.

## Patentansprüche

1. Gebinde enthaltend eine zum Schließen von Rissen in Holzwerkstoffen bestimmte Fugenmasse bestehend zumindest aus einer Lehmkomponente, Armierungsstoffen, nämlich textile Fasern, Kunststofffasern oder metallischen Fasern- und Zusatzstoffen, nämlich Holzmehl und / oder Farbpigmente umfassenden festen Komponente sowie einer flüssigen Komponente, nämlich zumindest einem Bindemittel, **gekennzeichnet durch** eine Verpackungseinheit, welche wenigstens zwei, jeweils die eine der beiden unterschiedlichen Komponenten enthaltende Teilverpackungen umfasst, wobei zumindest einer der Teilverpackungen ein zur Darstellung einer bioziden, insbesondere einer alkalischen Atmosphäre in der Fugenmasse geeigneter Stoff zugemischt ist, wobei der zuzumischende Stoff in einer von der festen und der flüssigen Komponente getrennten Teilverpackung vorliegt, wobei jede Teilverpackung nach erstmaligem Öffnen erneut verschließbar ausgebildet ist, wobei die, die feste Komponente enthaltende Teilverpackung aus wenigstens zwei trennbaren Packungseinheiten besteht, die jeweils unterschiedliche Bestandteile der festen Komponente enthalten, wobei die, die Armierungsstoffe enthaltende Packungseinheit in wenigstens zwei Einheiten unterteilt ist, deren jeweilige Armierungsstoffe sich hinsichtlich der Korngröße bzw. einer Faserlänge unterscheiden und wobei das Gebinde zusätzlich ein aus einer Leerkartusche, einem Schlauchbeutel oder einem vergleichbaren nutzerseitig mit einer einsetzbaren Fugenmasse zu befüllendes Behältnis umfasst.

2. Gebinde nach Anspruch 1, **dadurch gekennzeichnet, dass** die wenigstens zwei Teilverpackungen luftdicht ausgebildet sind.

3. Gebinde nach Anspruch 1 oder 2, **dadurch gekennzeichnet dass** das Bindemittel Zusatzstoffe in der Form von Pigmenten enthält.

4. Gebinde nach Anspruch 1 oder 2, **dadurch gekennzeichnet, dass** das Bindemittel in der Form einer flüssigen Wasserglaslösung vorliegt.

5. Gebinde nach Anspruch 1 oder 2, **dadurch gekennzeichnet, dass** das Bindemittel ein trocknendes Öl ist.

6. Gebinde nach Anspruch 1, 2 oder 5, **dadurch gekennzeichnet, dass** das Bindemittel aus einem mit einem Trocknungshilfsmittel gemischten Leinöl oder Rapsöl besteht.

7. Gebinde nach einem der Ansprüche 1 bis 3, **dadurch gekennzeichnet, dass** das Bindemittel zumindest aus einem Harz aus der Gruppe Alkyd-, Acryl-, Amin- und Phenolharz sowie einem Lösungsmittel oder zumindest einem Harz aus der Gruppe Alkyd-, Acryl-, Amin- und Phenolharz sowie einem Öl und einem weiteren Lösungsmittel besteht.

8. Gebinde nach einem der Ansprüche 1 bis 7 **gekennzeichnet durch** wenigstens eine, die flüssige Komponente enthaltende Teilverpackung und wenigstens zwei, die feste Komponente in unterschiedlichen Korngrößen enthaltende Teilverpackungen.

## Claims

1. Cask containing a joint compound intended for closing cracks in derived timber products, consisting at least of a clay component, reinforcement materials, namely textile fibres, synthetic fibres or metallic fibres and additives, namely saw dust and/or solid components comprising colour pigments and a liquid component, namely at least one binder, **characterised by** a packing unit which includes at least two partial packings each containing one of the two different components, wherein at least one of the partial packings has a material admixed with it, said material being suitable to represent a biocidal, particularly an alkaline, atmosphere in the joint compound, wherein the material to be admixed is present in a partial packing separated from the solid and liquid component, wherein each partial packing is formed to be re-closable after it has first been opened, wherein the partial packing containing the solid component consists of at least two separable packing units which each contain different constituents of the solid component, wherein the packing unit containing the reinforcement materials is divided into at least two units, the respective reinforcement materials thereof being differentiated in terms of particle size or fibre length, and wherein the cask additionally includes an empty cartridge, a tubular bag or a comparable container which is to be filled with an insertable joint compound by the user.

2. Cask as claimed in claim 1, **characterised in that** the at least two partial packings are formed in an air-tight manner.

3. Cask as claimed in claim 1 or 2, **characterised in that** the binder contains additives in the form of pigments.

4. Cask as claimed in claim 1 or 2, **characterised in that** the binder is present in the form of a liquid water glass solution.

5. Cask as claimed in claim 1 or 2, **characterised in that** the binder is a drying oil.

6. Cask as claimed in claim 1, 2 or 5, **characterised in that** the binder consists of a linseed oil or rapeseed oil mixed with a drying aid.

7. Cask as claimed in any one of claims 1 to 3, **characterised in that** the binder consists at least of a resin from the group alkyd resin, acryl resin, amine resin and phenol resin and of a solvent or of at least one resin from the group alkyd resin, acryl resin, amine resin and phenol resin and an oil and a further solvent.

8. Cask as claimed in any one of claims 1 to 7, **characterised by** at least one partial packing containing the liquid component and at least two partial packings containing the solid component in different particle sizes.

## Revendications

1. Colis contenant une matière de jointement se destinant à fermer des fissures dans des matériaux dérivés du bois, constituée au moins d'un composant d'argile, de substances de renforcement, à savoir de fibres textiles, de fibres de carbone ou de substances métalliques à base de fibres et d'additifs, à savoir d'un composant solide comprenant de la poudre de bois et/ou des pigments colorés ainsi que d'un composant liquide, à savoir au moins un liant, **caractérisé par** une unité d'emballage, qui comprend au moins deux emballages partiels contenant respectivement l'un des deux composants différents, dans lequel une substance adaptée pour constituer une atmosphère biocide, en particulier une atmosphère alcaline, dans la matière de jointement est ajoutée par mélange à au moins un des emballages partiels, dans lequel la substance à ajouter par mélange est présente dans un emballage partiel séparé du composant solide et du composant liquide, dans lequel chaque emballage partiel est réalisé de manière à pouvoir être refermé après une première ouverture, dans lequel l'emballage partiel contenant le composant solide est constitué d'au moins deux unités d'emballage pouvant être séparées, qui contiennent respectivement des constituants différents du composant solide, dans lequel l'unité d'emballage contenant les substances de renforcement est divisée en au moins deux unités, dont les substances de renforcement respectives se distinguent en matière de taille de particules ou de longueur de fibre, et dans lequel le colis comprend en supplément une cartouche vide, un sachet tubulaire ou un contenant comparable côté utilisateur à remplir d'une matière de jointement pouvant être insérée.

2. Colis selon la revendication 1, **caractérisé en ce que** les au moins deux emballages partiels sont réalisés de manière étanche à l'air.

3. Colis selon la revendication 1 ou 2, **caractérisé en ce que** le liant contient des additifs sous la forme de pigments.

4. Colis selon la revendication 1 ou 2, **caractérisé en ce que** le liant est présent sous la forme d'une solution de verre soluble liquide.

5. Colis selon la revendication 1 ou 2, **caractérisé en ce que** le liant est une huile à sécher.

6. Colis selon la revendication 1, 2 ou 5, **caractérisé en ce que** le liant est constitué d'une huile de lin ou d'une huile de colza mélangée à un adjuvant de séchage.

7. Colis selon l'une quelconque des revendications 1 à 3, **caractérisé en ce que** le liant est constitué au moins d'une résine issue du groupe de la résine alkyde, de la résine acrylique, de la résine d'amine et de la résine phénolique ainsi que d'un solvant ou au moins d'une résine issue du groupe de la résine alkyde, de la résine acrylique, de la résine d'amine et de la résine phénolique ainsi que d'une huile et d'un autre solvant.

8. Colis selon l'une quelconque des revendications 1 à 7, **caractérisé par** au moins un emballage partiel contenant le composant liquide et par au moins deux emballages partiels contenant le composant solide en des tailles de particules différentes.
